Europäisches Patentamt

(19) European Patent Office   (11) Publication number: **0 051 325**
Office européen des brevets   **B1**

(12) **EUROPEAN PATENT SPECIFICATION**

(45) Date of publication of patent specification: **28.05.86**   (51) Int. Cl.⁴: **H 04 Q 9/14, G 07 C 1/10**

(21) Application number: **81201060.1**

(22) Date of filing: **22.09.81**

(54) **A remote control system.**

(30) Priority: **31.10.80 NL 8005971**

(43) Date of publication of application:
**12.05.82 Bulletin 82/19**

(45) Publication of the grant of the patent:
**28.05.86 Bulletin 86/22**

(84) Designated Contracting States:
**BE DE FR GB IT LU NL SE**

(56) References cited:
**WO-A-80/02631**
**FR-A-2 188 881**
**FR-A-2 289 950**
**US-A-4 162 483**
**US-A-4 196 417**

**ELEKTROTECHNISCHE ZEITSCHRIFT, Ausgabe B, vol. 25, no. 14, July 19, 1973, Berlin, DE KLOSE "Automatische Gleitzeiterfassung", pages 365-367**

(73) Proprietor: **Havema B.V.**
**Haagweg 180**
**NL-2282 AJ Rijswijk (NL)**

(72) Inventor: **Roest, Mannus**
**Bleijenburg 23**
**NL-2678 De Lier (NL)**

(74) Representative: **Mommaerts, Johan Hendrik, Dipl.-Phys.**
**Octrooibureau Lux Willem Witsenplein 4**
**NL-2596 BK Den Haag (NL)**

Courier Press, Leamington Spa, England.

## Description

The invention relates to a system for controlling switching units from a central station via a coaxial cable to which said switching units are connected, said central station being provided with means for emitting, via said cable, pulse trains, modulated on a carrier wave, said pulse trains comprising address bits and data bits, said switching unit comprising means for demodulating said modulated carrier wave and temporarily storing a pulse train, means for comparing the address bits with a locally stored address characterising the unit in question, and for extracting said data bits and using said bits in means performing a switching action if the address comprised in said pulse train corresponds to the locally stored address. Each switching unit comprising a capacitor which is charged by a direct current supplied by said central station via said coaxial cable.

Such a system is known from US—A 4 162 483. Such a system has the advantage that only a single coaxial cable is needed to which an arbitrary number of units can be connected in parallel, so that the system can be extended at will, provided that sufficient different addresses are available.

This known system has, however, the drawback that the switching units are rather complex and, therefore, expensive, which is only acceptable if the task of the switching units is an important one, and the number of said units is relatively restricted. This known system is specifically designed for monitoring door locks in a building and comparable safety measures, and the switching units are provided with means for reporting the state of the switching means in question back to the central station. These switching units require a local current source, and will be affected by current supply failures accordingly.

In US—A 4 162 483 it is contemplated to charge a capacitor in a switching unit by means of a direct current supplied by the central station, and to use this capacitor as a local current source, but this current source is not used to supply current to the whole unit including the switching means proper, but only, as a safety measure, for feeding a modulator used for sending back signals to the central station, so as to avoid that, if said modulator is not switched off, an uninterrupted series of signals is sent over the coaxial cable towards the central station, which would seriously hamper the operation of the system.

It is an object of the invention to provide a simplified system for performing simple on-off switching actions in an arbitrary number of switching points, e.g. for centrally switching on and off lighting means or similar apparatus, which system should be cheap, and, nevertheless, highly dependable, and should not be affected by current supply failures.

To that end the system according to the invention is characterised in that each switching unit further comprises a bistable (polar) relay which is adapted to be switched over in correspondence to the received data or bits, the energising current for said relay being provided by said capacitor which is charged during the inactive periods between said switching actions.

The advantage of a bistable relay is that it needs only current for changing over to the other position, and is, therefore, unaffected by current supply disturbances, the more so as the current supply for switching over said relay is provided by a local capacitor. The charging current for such a capacitor is very small, in particular since the charging time can be long in view of the fact that the number of switching actions is relatively small, so that, even in the case of a large number of switching units, the total charging current will be relatively small too.

Such a system is, in particular, suitable for switching on and off, by means of a respective switching element, one or more devices connected to a local supply source, such as lighting means, or audio or video apparatus, and, in the latter case, the audio and video signals in question can be transmitted via said cable.

The switching action can be controlled by the central station independency of the environment conditions and/or the presence or absence of persons in the space in which said devices are installed.

The invention will be described below in detail by reference to a drawing, showing in:

Fig. 1 a simplified diagrammatical representation of the main elements of a system according to the invention;

Fig. 2 a representation of a preferably used signal form;

Fig. 3 a simplified block diagram of a switching apparatus used in this system; and

Fig. 4 a diagrammatical representation of a lighting circuit in a working space to be controlled by such a system.

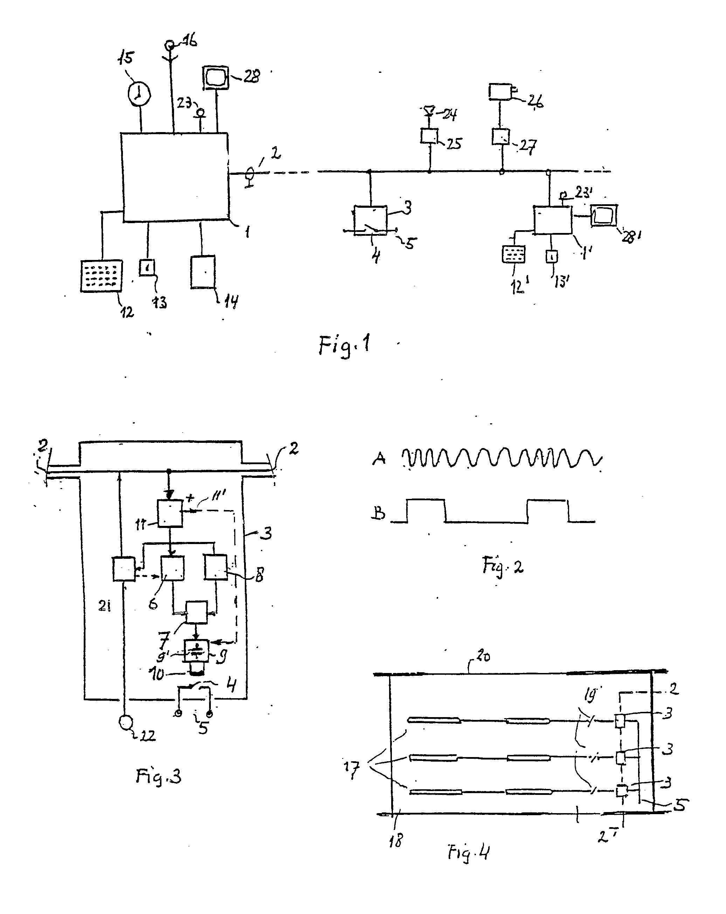

The system according to the invention diagrammatically shown in Fig. 1 comprises a central station 1 with a task to be described below in more detail. To this central station a single coaxial line 2 is connected, to which a plurality of switching apparatuses to be controlled from the central station 1 is connected, one of the latter being diagrammatically shown. These switching apparatuses comprise a switch 4 for controlling an external circuit 5.

The line 2 can be installed through all the spaces of a building or the like, so that everywhere, as desired, switching apparatuses can be connected, which will reduce the installation cost and simplify a later connection of apparatuses.

Since all the apparatuses 3 are connected in parallel, the control signals should be provided with specific characteristics for which only the apparatus in question or a group thereof is sensitive. This can be done in different ways, such as, for instance, by using different frequency channels which, by using a coaxial line adapted to operate in a wide frequency range, is possible without difficulties. Because of its insensitivity for attenuation and spurious signals influencing the amplitude, use is preferably made of frequency modulation so that, then, together with the shielding effect of a coaxial line, a completely interference-less transmission can be provided.

Preferably a modulation is used as exemplified in Fig. 2. Frequency modulation of a wave, which is not necessarily sinusoidal, is shown at A, and leads to alternating compression and expansion of the waveform, from which, as shown at B, pulses can be derived by detection. With such a modulation binary coding can be performed, the extent of which being determined by the number of pulses in each series used for coding.

Fig. 3 shows a block diagram of an apparatus 3 suitable for processing signals according to Fig. 2. This apparatus comprises a detection stage 6 connected in the manner shown to the coaxial line 2, and being adapted to derives pulses according to Fig. 2B from frequency modulated signals according to Fig. 2A transmitted through the line. This detection stage can be provided, if necessary, with filter means for removing undesired frequencies, for instance if various frequency channels are used.

The detection stage 6 is connected to a comparator stage 7 which is, on the other hand, connected to a memory stage 8, in which one or more codes for which the apparatus in question 3 should be sensitive have been stored. As soon as the comparator stage 7 ascertains the equality between a received and a stored code, the control signals transmitted by the central station after the coded address signals are passed towards a switching stage 9 in which these signals are, if necessary, amplified and shaped, after which a corresponding energising signal is sent towards an actuating element 10 for switch 4.

The various stages 6 . . 9 can be constructed as integrated circuits, and consume very little current. Although it is possible to provide a separate feeding line next to the coaxial line, the current supply can also take place via the coaxial line 2, as the over-all current intensity, even with a larger number of connected apparatuses 3, will remain sufficiently small for being conducted without difficulties by the line 2 having only a relatively small cable cross-section. This feeding current can, as shown, be separated by means of a suitable separator stage 11 at a dc output 11', the latter also ensuring that the supply current is kept removed from the signal input.

If the feeding current to be supplied by the central station 1 should be kept at a limited value, it is advisable to construct the actuating element 10 in such a manner that it has two stable switching conditions in which no current is consumed, a current pulse being required for switching over. An example thereof is a polar relay. In particular stage 9 comprises a capacitor 9' being charged by a weak current via line 2 and stage 11 during the quiescent periods, and, when discharged, can supply the required energising current for the relay.

Controlling the apparatus 3 takes place by transmitting a suitable pulse series in modulated form from the central station 1, said series consisting of an address code and one or more switching pulses. The latter can be coded in binary form too, in particular if different switching possibilities exist, and then the apparatuses 3 should be provided with additional recognition means for being adapted to recognise this code too.

Transmitting these signals can be brought about in different ways. In Fig. 1 a keyboard 12 is diagrammatically indicated by means of which signal generation can be brought about by hand, and then auxiliary means should be present in the central station or in the keyboard 12 for translating keyboard actuations into modulated pulse series. Of course also input from a magnetic tape, punched tape or the like is possible.

A particular example of the latter possibility is when using coded cards or the like to be inserted in a reading apparatus 13 by a person on arrival or departure. The code in question is read therein, and is translated in the central station 1 into signals to be transmitted via line 2, e.g. for switching on or off the lighting in the working space of this person. Moreover a message can be stored in an additional memory stage 14, or can be registered in another manner, from which the presence or absence of the person in question can be read out as desired. Furthermore it can be ascertained, if required, whether these time points are in conformity with the working hours stated for this person. A clock 15 determines the time, and can, furthermore, be used for general switching functions, e.g. if fixed working hours are in use.

Moreover sensors 16 can be connected to the central station 1 for determining an outside condition, such as, for instance, the daylight intensity, the temperature and the like, which shall be discussed in detail below.

In Fig. 4 three groups of lamps 17 provided in a working space 18 are diagrammatically indicated, which lamps can, for instance, be connected group-wise to the mains 5 by means of corresponding switches 19, at least if the switching apparatus corresponding to the group in question has received a switching signal via line 2. These lamps are mounted at different distances from a window 20. The signals can, for instance, be such that, on the basis of light intensity measurements at the side in question of the building, only the lamps remote from the window 20 will be switched on. The control code can be so that, apart from controlling, also the presence of a person or persons working in a space will lead to switching on and off by means of an address code different from that used for switching on the basis of light intensity. The switching apparatuses in question can for instance, be sensitive for more than one address code, and in particular the light intensity code will be active only if the presence code has already brought about a switching action. The circuits of the central station 1 connected to the light intensity sensors 16 should, of course, suppress the influence of light intensity fluctuations of short duration.

The division of lamps into groups can also be such that, if several persons work in the same space, the lighting near the working site in question is allowed to be switched on only if the person working there has reported, and will be switched off after his departure. It is also possible that the first arriving person adapts the lighting for being switched on, and the last leaving person switches it off, and to that end an adding/-subtracting circuit can be included in the central station 1.

In this manner useless burning of lighting in working spaces is avoided, which will lead to considerable savings. Moreover the central station can be programmed so that, as soon as the lighting in a given space is made switchable or is switched off, also the lighting in adjacent corridors etc. is switched on or off resp., all this in such a manner that in a not-occupied department no useless lighting will be kept burning.

If the energy supply of the central station should fall out, the switches 4 remain in the same position if they are constructed as polar switches or the like, so that disturbance in the central station has no consequence for the switching condition, and, when removing the disturbance, no further switching actions are required either.

What has been described in an exemplary way for controlling the lighting in a building can, of course, also be adapted to other purposes, and, moreover, many modifications can be made therein.

It is also possible to adapt an apparatus 3 for reverse signalling towards the central station, and therefor a suitable modulation stage 21 can be provided which is connected to a sensor 22 for a condition to be checked, as well as to the memory 8 or to another source for providing the recognition code of the apparatus in question, and provisions should be made for avoiding that the emitted signals would influence the receiving side of the apparatus.

It is, furthermore, possible to use separate channels with a suitable frequency differing from the control frequency for sound or picture transmission or the like. At the central station 1 a microphone 23 is diagrammatically shown, by means of which an adapted transmission unit in the central station can be controlled, and loudspeakers 24 are coupled to the line 2 by means of a demodulation unit 25. The latter units 25, apart from being constructed as a modulator or demodulator for sound transmission, can, moreover, be constructed in the manner of Fig. 3, viz. with a detector for control signals, so as to allow to switch the loudspeaker 24 on or off at a distance, e.g. when messages are destined only for specific departments. Of course it is also possible to transmit sound towards the central station 1 if the unit 25 is provided with a suitable modulator.

Moreover Fig. 1 shows a television camera 26 coupled to the line 2 by means of a coupling unit 27, so as to transmit picture signals towards the central station 1, where the latter can be made visible on a screen 28. The apparatuses 26 may, for instance, be used for watching specific parts of a building. The units 27 can operate as well in the manner of switching apparatus 3 so that a camera 26 can be switched on at will from the central station, which can also be done automatically in a given sequence. Of course also picture transmission from the central station can take place towards picture screens which may be separately switched if desired.

Fig. 1 shows an auxiliary station 1' with a keyboard 12' and a picture screen 28', by means of which, for instance, a connection with the cameras 26 can be made from another point. Such an auxiliary station 1' can, for instance, be adapted for making a connection with a restricted number of apparatuses, for instance for watching a specific department, and, then, the station 1' can be constructed simpler accordingly. It is also possible to provide the auxiliary station 1' with a reading apparatus 13', so as to allow to check, there, the arrival and departure of persons, e.g. if several entrances for personnel are present.

It is also possible to construct the reverse signalling part 21, 22 of the apparatus of Fig. 3 as a separate unit. Such a unit can, for instance, also be used for giving alarm, and a recognition code can serve for determining the origin thereof.

A clock 15 may be used for controlling clocks or time reproducing means connected to the line 2.

Such a system is excellently suited for being installed in a building or assembly of buildings, and also in the case of already existing buildings the installation cost will be low, and an arbitrary extension is possible. A binary code by means of pulses allows a great number of possibilities, and by changing the basic frequency of the modulated signals additional channels can be provided. Such a system can, furthermore, be used everywhere where, otherwise, thick cable bundles should be used, as, for instance, on board of ships and aeroplanes. It can even be favourable to use such a switching system for automobile lighting.

Apart from a coaxial cable for electrical transmission, also a glass fibre with radiation transmission can be used. Making connections is, however, more complicated then, so that, for the moment, electrical transmission is preferred.

## Claims

1. A system for controlling switching units (3) from a central station (1) via a coaxial cable (2) to which said switching units (3) are connected, said central station (1) being provided with means for emitting, via said cable (2), pulse trains modulated on a carrier wave, said pulse trains comprising address bits and data bits, said switching unit (3) comprising means (6) for demodulating said modulated carrier wave and temporarily storing a pulse train, means (7) for comparing the address bits with a locally stored address (8) characterising the unit in question, and for extracting said data bits and using said bits in means (9, 10) performing a switching action if the address comprised in said pulse train corresponds to the locally stored address, each switching unit (3) comprising a capacitor (9') which is charged by a direct current supplied by said central station (1) via said coaxial cable (2), characterised in that each switching unit (3) further comprises a bistable (polar) relay (10) which is adapted to be switched over in correspondence to the received data bit or bits, the energising current for said relay (10) being provided by said capacitor (9') which is charged during the inactive periods between said switching actions.

2. The system of claim 1, characterised in that each switching unit (3) is adapted to switch on and off one or more devices connected to a local supply source, in particular lighting means (17) or audio or video apparatus (24, 26), the audio or video signals for the latter being transmitted via said cable (2).

3. The system of claim 2, characterised in that the central station (1) is adapted to control said switching unit (3) independency of environment conditions and/or the presence or absence of persons in the space in which said devices (27, 24, 26) are installed.

## Revendications

1. Système de commande d'unités de commutation (3) à partir d'une station centrale (1), par l'intermédiaire d'un câble coaxial (2) auquel les unités de commutation (3) sont raccordées, ladite station centrale (1) comportant des moyens d'émission, par l'intermédiaire du câble (2), de trains d'impulsions modulées sur une onde porteuse, ces trains d'impulsions comprenant des bits d'adresse et des bits de données, ladite unité de commutation (3) comportant des moyens (6) de démodulation de l'onde porteuse modulée et de stockage temporaire d'un train d'impulsions, des moyens (7) de comparaison des bits d'adresse avec une adresse (8) stockée localement qui caractérisé l'unité en question, et d'extraction des bits de données et d'utilisation de ces bits dans des moyens (9, 10) effectuant une action de commutation si l'adresse comprise dans ledit train d'impulsions correspond à l'adresse stockée localement, chaque unité de commutation (3) comprenant un condensateur (9') qui est chargé par un courant continue fourni par la station de commande (1) par l'intermédiaire du câble coaxial (2), caractérisé en ce que chaque unité de commutation (3) comprend également un relais bistable (polaire) (10) qui est prévu pour changer de position en correspondance du ou des bits de données reçus, le courant d'alimentation de ce relais (10) étant fourni par le condensateur (9') qui est chargé pendant les périodes inactives entre les actions de commutation.

2. Système suivant la revendication 1, caractérisé en ce que chaque unité de commutation (3) est prévue pour mettre en service et arrêter un ou plusieurs dispositifs reliés à une alimentation locale, en particulier des moyens d'éclairage (17) ou des appareils audio ou vidéo (24, 26), les signaux audio ou vidéo pour ces derniers étant transmis par ledit câble (2).

3. Système suivant la revendication 2, caractérisé en ce que la station centrale (1) est prévue pour commander l'unité de commutation (3) en fonction de conditions d'environnement et/ou de la présence ou de l'absence de personnes dans l'espace où sont installés lesdits dispositifs (27, 24, 26).

## Patentansprüche

1. System zum Steuern von Schalteinheiten (3) von einer Zentrale (1) über ein Koaxialkabel (2), mit dem die Schalteinheiten (3) verbunden sind, wobei die Zentrale (1) mit Einrichtungen zum Aussenden von auf einer Trägerwelle modulierten Impulszügen über das Kabel (2) versehen ist, wobei die Impulszüge Adressenbits und Datenbits enthalten, wobei die Schalteinheit (3) Einrichtungen (6) zum Demodulieren der modulierten Trägerwelle und zum zeitweiligen Speichern eines Impulszugs und Einrichtungen (7) zum Vergleichen der Adressenbits mit einer lokal gespeicherten, die in Frage stehende Einheit charakterisierenden Adresse (8) und zum Extrahieren der Datenbits und zum Verwenden der Bits in Einrichtungen (9, 10), die einen Schaltvorgang ausführen, falls die Adresse in dem Impulszug enthalten ist, welcher der lokal gespeicherten Adresse entspricht, enthält, und wobei jede Schalteinheit (3) einen Kondensator (9') enthält, der durch einen Gleichstrom geladen wird, der durch die Zentrale (1) über das Koaxialkabel (2) zugeführt wird, dadurch gekennzeichnet, daß jede Schalteinheit (3) des weiteren ein bistables (polares) Relais (10) enthält, das angepaßt ist, um in übereinstimmung mit dem empfangenen Datenbit oder den -bits umgeschaltet zu werden, wobei der Erregungsstrom für das Relais (10) durch den Kondensator (9') abgeben wird, der während der inaktiven Perioden zwischen den Schaltvorgängen geladen wird.

2. System nach Anspruch 1, dadurch gekennzeichnet, daß jede Schalteinheit (3) angepaßt ist, um eine oder mehrere mit einer lokalen Spannungsquelle, insbesondere einer Leuchteinrichtung (17) oder einem Hör- oder Videogerät (24, 26) verbundene Vorrichtungen ein- oder auszuschalten, wobei die Hör- oder Videosignale dafür über das Kabel (2) übertragen werden.

3. System nach Anspruch 2, dadurch gekennzeichnet, daß die Zentrale (1) angepaßt ist, um die Schalteinheit (3) in Abhängigkeit von den Umgebungszuständen und/oder von der Anwesenheit oder Abwesenheit von Personen in dem Raum, in dem die Vorrichtungen (27, 24, 26) installiert sind, zu steuern.

Fig. 1

Fig. 3

Fig. 2

Fig. 4

1